# EUROPEAN PATENT APPLICATION

(11) **EP 3 745 803 A1**
(43) Date of publication of application: **02.12.2020**
(21) Application number: 18913710.2
(22) Date of filing: 09.05.2018
(51) Int. Cl.: H04W 74/08

(54) **WIRELESS COMMUNICATION METHOD, TERMINAL, AND NETWORK DEVICE**

(30) Priority: 06.04.2018 WO PCT/CN2018/082099
(71) Applicant: GUANGDONG OPPO MOBILE TELECOMMUNICATIONS CORP., LTD., Wusha, Chang'an Dongguan Guangdong 523860 (CN)
(72) Inventor: LIU, Jianhua, Dongguan, Guangdong 523860 (CN); YANG, Ning, Dongguan, Guangdong 523860 (CN)
(74) Representative: Manitz Finsterwald Patent- und Rechtsanwaltspartnerschaft mbB
(86) International application number: PCT/CN2018/086163
(87) International publication number: WO 2019/192051

(57) **Abstract**

Embodiments of the present application provide a wireless communication method and a device. Parameters occupying more bits and/or more parameters can be transmitted in a random access process. The method comprises: a terminal sends a first message to a network device, the first message being a message 3 MSG3 in a random access process, wherein the first message carries a part of information in a first parameter; the terminal receives a response message sent by the network device for the first message, the response message being a message 4 MSG4 in the random access process.

## Description

### CROSS-REFERENCE TO RELATED APPLICATION

This application claims priority to International Application No. PCT/CN2018/082099, filed with the Chinese Patent Office on April 6, 2018 and titled "WIRELESS COMMUNICATION METHOD, TERMINAL AND NETWORK DEVICE", the disclosure of which is hereby incorporated by reference in its entirety.

### TECHNICAL FIELD

The disclosure relates to the field of communication, and more particularly to a method for wireless communication, a terminal and a network device.

### BACKGROUND

In the Long Term Evolution (LTE) system, during a random access process, a terminal may send identification information of the terminal to a network device through a message 3 (MSG3) of the random access process.

With development of communication systems, identification information or other parameter sent to the network device by a terminal will occupy more bits in the random access process, or more parameters will be transmitted in the random access process. Therefore, a problem urgent to be solved is how to solve this problem.

### SUMMARY

The embodiments of the disclosure provide a method and device for wireless communication, which can transmit a parameter occupying more bits and/or transmit more parameters in a random access process.

A first aspect provides a method for wireless communication, which may include the following operations. A terminal sends a first message to a network device. The first message is a message 3 (MSG3) in a random access process and the first message carries partial information in a first parameter.

The terminal receives a response message sent by the network device responsive to the first message. The response message is a message 4 (MSG4) in the random access process.

In combination with the first aspect, in a possible implementation mode of the first aspect, the method may further include the following operation.

The terminal sends a second message to the network device. The second message carries other information, except the partial information, in the first parameter.

In combination with the first aspect or any abovementioned possible implementation mode, in another possible implementation mode of the first aspect, the second message may be a message 5 (MSG5) in the random access process.

In combination with the first aspect or any abovementioned possible implementation mode, in another possible implementation mode of the first aspect, the first parameter may be: identification information of the terminal, or a parameter used to indicate a network slice where the terminal is located, or an establishment cause value in the MSG3 or an Inactive Radio Network Temporary Identity (I-RNTI).

In combination with the first aspect or any abovementioned possible implementation mode, in another possible implementation mode of the first aspect, the identification information may be a System Architecture Evolution (SAE) Temporary Mobile Subscriber Identity (S-TMSI) or 5th-Generation (5G)-S-TMSI of the terminal.

In combination with the first aspect or any abovementioned possible implementation mode, in another possible implementation mode of the first aspect, the first parameter may be the identification information of the terminal, and the method may further include the following operation.

The terminal determines that the response message is responsive to the first message sent by the terminal according to the partial information of the identification information being carried in the response message.

In combination with the first aspect or any abovementioned possible implementation mode, in another possible implementation mode of the first aspect, the first parameter may be the identification information of the terminal, and the partial information in the first message may be information, except information of a target core network device of a Non-Access-Stratum (NAS) message of the terminal, in the identification information of the terminal.

In combination with the first aspect or any abovementioned possible implementation mode, in another possible implementation mode of the first aspect, the total number of bits required to be occupied by the identification information may be 48 bits.

In combination with the first aspect or any abovementioned possible implementation mode, in another possible implementation mode of the first aspect, the first parameter may be the identification information of the terminal, and the other information in the second message may be information which is used to identify the target core network device of the NAS message sent by the terminal.

In combination with the first aspect or any abovementioned possible implementation mode, in another possible implementation mode of the first aspect, the first message may further include partial or whole information of a second parameter.

In combination with the first aspect or any abovementioned possible implementation mode, in another possible implementation mode of the first aspect, the second parameter may include a parameter used to indicate the network slice accessed by the terminal, or an establishment cause value carried in the MSG3 or an I-RNTI.

In combination with the first aspect or any abovementioned possible implementation mode, in another possible implementation mode of the first aspect, the number of bits occupied by the establishment cause value may be greater than 3 bits; and/or the number of bits occupied by the parameter used to indicate the network slice where the terminal is located may be 24 bits.

In combination with the first aspect or any abovementioned possible implementation mode, in another possible implementation mode of the first aspect, the first message may be a message used to indicate a Radio Resource Control (RRC) connection request or an RRC request.

In combination with the first aspect or any abovementioned possible implementation mode, in another possible implementation mode of the first aspect, the second message may be a message used to indicate RRC connection setup completion, RRC connection resume completion, RRC setup completion or RRC resume completion.

In combination with the first aspect or any abovementioned possible implementation mode, in another possible implementation mode of the first aspect, an access network device presently accessed by the terminal may be an access network device of an LTE system, and a core network device presently accessed by the terminal may be a core network device of a 5G system.

A second aspect provides a method for wireless communication, which may include the following operations.

A network device receives a first message sent by a terminal. The first message is a message 3 (MSG3) in a random access process, and the first message carries partial information in a first parameter.

The network device sends a response message to the terminal responsive to the first message. The response message is a message 4 (MSG4) in the random access process.

In combination with the second aspect, in a possible implementation mode of the second aspect, the method may further include the following operation.

The network device receives a second message sent by the terminal. The second MSG carries other information, except the partial information in the first parameter.

In combination with the second aspect or any abovementioned possible implementation mode, in another possible implementation mode of the second aspect, the second message may be a message 5 (MSG5) in the random access process.

In combination with the second aspect or any abovementioned possible implementation mode, in another possible implementation mode of the second aspect, the first parameter may be: identification information of the terminal, or a parameter used to indicate a network slice where the terminal is located, or an establishment cause value in the MSG3 or an Inactive-Radio Network Temporary Identity (I-RNTI).

In combination with the second aspect or any abovementioned possible implementation mode, in another possible implementation mode of the second aspect, the identification information may be an S-TMSI or 5G-S-TMSI of the terminal.

In combination with the second aspect or any abovementioned possible implementation mode, in another possible implementation mode of the second aspect, the first parameter may be the identification information of the terminal, and the response message may carry the partial information of the identification information.

In combination with the second aspect or any abovementioned possible implementation mode, in another possible implementation mode of the second aspect, the first parameter may be the identification information of the terminal, and the partial information carried in the first message may be information, except information of a target core network device of a NAS message of the terminal, in the identification information of the terminal.

In combination with the second aspect or any abovementioned possible implementation mode, in another possible implementation mode of the second aspect, the total number of bits required to be occupied by the identification information may be 48 bits.

In combination with the second aspect or any abovementioned possible implementation mode, in another possible implementation mode of the second aspect, the first parameter may be the identification information of the terminal, and the other information in the second message may be the information used to identify the target core network device of the NAS message sent by the terminal.

In combination with the second aspect or any abovementioned possible implementation mode, in another possible implementation mode of the second aspect, the first message may further include partial or whole information of a second parameter.

In combination with the second aspect or any abovementioned possible implementation mode, in another possible implementation mode of the second aspect, the second parameter may include a parameter used to indicate the network slice accessed by the terminal, or an establishment cause value in the MSG3 or an I-RNTI.

In combination with the second aspect or any abovementioned possible implementation mode, in another possible implementation mode of the second aspect, the number of bits occupied by the establishment cause value may be greater than 3 bits; and/or, the number of bits occupied by the parameter used to indicate the network slice where the terminal is located may be 24 bits.

In combination with the second aspect or any abovementioned possible implementation mode, in another possible implementation mode of the second aspect, the first message may be a message used to indicate an RRC connection request or an RRC request.

In combination with the second aspect or any abovementioned possible implementation mode, in another possible implementation mode of the second aspect, the second message may be a message used to indicate RRC connection setup completion, RRC connection resume completion, RRC setup completion or RRC resume completion.

In combination with the second aspect or any abovementioned possible implementation mode, in another possible implementation mode of the second aspect, an access network device presently accessed by the terminal may be an access network device of an LTE system, and a core network device presently accessed by the terminal may be a core network device of a 5G system.

A third aspect provides a method for wireless communication, which may include the following operations.

A terminal sends a first message to a network device. The first message is a message 3 (MSG3) in a random access process.

The terminal receives a response message sent by the network device responsive to the first message. The response message is a message 4 (MSG4) in the random access process.

The terminal sends a second message to the network device. The second message carries identification information of the terminal, and the second message is a message 5 (MSG5) in the random access process.

In combination with the third aspect, in a possible implementation mode of the third aspect, the identification information of the terminal may be an S-TMSI or 5G-S-TMSI of the terminal.

In combination with the third aspect or any abovementioned possible implementation mode, in another possible implementation mode of the third aspect, the first message may carry a random number.

In combination with the third aspect or any abovementioned possible implementation mode, in another possible implementation mode of the third aspect, the number of bits occupied by the random number may be less than the number of bits occupied by the identification information.

In combination with the third aspect or any abovementioned possible implementation mode, in another possible implementation mode of the third aspect, before the first message is sent, the identification information is stored in the terminal.

In combination with the third aspect or any abovementioned possible implementation mode, in another possible implementation mode of the third aspect, the first message may carry at least one of following parameters: a parameter used to indicate a network slice accessed by the terminal, or an establishment cause value carried in the MSG3 or an I-RNTI.

In combination with the third aspect or any abovementioned possible implementation mode, in another possible implementation mode of the third aspect, the number of bits occupied by the establishment cause value may be greater than 3 bits; and/or, the number of bits occupied by the parameter used to indicate the network slice where the terminal is located may be 24 bits.

In combination with the third aspect or any abovementioned possible implementation mode, in another possible implementation mode of the third aspect, an access network device presently accessed by the terminal may be an access network device of an LTE system, and a core network device presently accessed by the terminal may be a core network device of a 5G system.

A fourth aspect provides a method for wireless communication, which may include the following operations.

A network device receives a first message sent by a terminal. The first message is a message 3 (MSG3) in a random access process.

The network device sends a response message to the terminal responsive to the first message. The response message is a message 4 (MSG4) in the random access process.

The terminal receives a second message sent by the network device. The second message carries identification information of the terminal, and the second message is a message 5 (MSG5) in the random access process.

In combination with the fourth aspect, in a possible implementation mode of the fourth aspect, the identification information of the terminal may be an S-TMSI or 5G-S-TMSI of the terminal.

In combination with the fourth aspect or any abovementioned possible implementation mode, in another possible implementation mode of the fourth aspect, the first message may carry a random number.

In combination with the fourth aspect or any abovementioned possible implementation mode, in another possible implementation mode of the fourth aspect, the number of bits occupied by the random number may be less than the number of bits occupied by the identification information.

In combination with the fourth aspect or any abovementioned possible implementation mode, in another possible implementation mode of the fourth aspect, the first message may carry at least one of following parameters: a parameter used to indicate a network slice accessed by the terminal, or an establishment cause value in the MSG3 or an I-RNTI.

In combination with the fourth aspect or any abovementioned possible implementation mode, in another possible implementation mode of the fourth aspect, the number of bits occupied by the establishment cause value may be greater than 3 bits; and/or, the number of bits occupied by the parameter used to indicate the network slice where the terminal is located may be 24 bits.

In combination with the fourth aspect or any abovementioned possible implementation mode, in another possible implementation mode of the fourth aspect, an access network device presently accessed by the terminal may be an access network device of an LTE system, and a core network device presently accessed by the terminal may be a core network device of a 5G system.

A fifth aspect provides a method for wireless communication, which may include the following operations.

In response to a message 3 (MSG3) in a random access process may carry identification information of a terminal, the identification information of the terminal is carried in the MSG3.

The terminal sends the MSG3 carrying the identification information to a network device.

In combination with the fifth aspect, in a possible implementation mode of the fifth aspect, the identification information may be an I-RNTI of the terminal.

In combination with the fifth aspect or any abovementioned possible implementation mode, in another possible implementation mode of the fifth aspect, the identification information may be a resume Identifier (ID) of the terminal.

In combination with the fifth aspect or any abovementioned possible implementation mode, in another possible implementation mode of the fifth aspect, the method may be applied to a first system, an access network device of the first system may be an LTE access network device, and a core network device of the first system may be a 5G core-network (5GC) device.

In combination with the fifth aspect or any abovementioned possible implementation mode, in another possible implementation mode of the fifth aspect, the length of the identification information of the terminal may be less than a length of the identification information, carried in the MSG3, of the terminal in a second system, an access network device of the second system may be a New Radio (NR) access network device, and a core network device of the second system may be a 5GC device.

In combination with the fifth aspect or any abovementioned possible implementation mode, in another possible implementation mode of the fifth aspect, the identification information may include first identification information of the access network device and second identification information used to indicate that the terminal is in the access network device. The first identification information may be identification information of the LTE access network device.

In combination with the fifth aspect or any abovementioned possible implementation mode, in another possible implementation mode of the fifth aspect, the number of bits occupied by the identification information may be less than 52 bits.

In combination with the fifth aspect or any abovementioned possible implementation mode, in another possible implementation mode of the fifth aspect, the method may be applied to the second system, the access network device of the second system may be the NR access network device, and the core network device of the second system may be the 5GC device.

A sixth aspect provides a terminal, which is configured to execute the method in the first aspect or any possible implementation mode of the first aspect or the third aspect or any possible implementation mode of the third aspect or the fifth aspect or any possible implementation mode of the fifth aspect. Specifically, the terminal includes functional modules configured to execute the method in the first aspect or any possible implementation mode of the first aspect or the third aspect or any possible implementation mode of the third aspect or the fifth aspect or any possible implementation mode of the fifth aspect.

A seventh aspect provides a network device, which is configured to execute the method in the second aspect or any possible implementation mode of the second aspect or the fourth aspect or any possible implementation mode of the fourth aspect. Specifically, the network device includes functional modules configured to execute the method in the second aspect or any possible implementation mode of the second aspect or the fourth aspect or any possible implementation mode of the fourth aspect.

An eighth aspect provides a terminal, which includes a processor, a memory and a transceiver. The processor, the memory and the transceiver communicate with one another through an internal connection path to transmit control and/or data signals, so as to enable the terminal to execute the method in the first aspect or any possible implementation mode of the first aspect or the third aspect or any possible implementation mode of the third aspect or the fifth aspect or any possible implementation mode of the fifth aspect.

A ninth aspect provides a network device, which includes a processor, a memory and a transceiver. The processor, the memory and the transceiver communicate with one another through an internal connection path to transmit control and/or data signals, so as to enable the network device to execute the method in the second aspect or any possible implementation mode of the second aspect or the fourth aspect or any possible implementation mode of the fourth aspect.

A tenth aspect provides a computer-readable medium having stored thereon a computer program, the computer program includes an instruction configured to execute the methods in the abovementioned aspects or any possible implementation mode.

An eleventh aspect provides a computer program product including an instruction. The computer program product, when run in a computer, enables the computer to execute the methods in the abovementioned aspects or any possible implementation mode.

A twelfth aspect provides a chip, which is configured to implement the method in any abovementioned aspect or each implementation mode thereof.

Specifically, the chip includes a processor, configured to call and run a computer program in a memory to enable a device installed with the chip to execute the method in any abovementioned aspect or each implementation mode thereof.

A thirteenth aspect provides a computer program. The computer program, when run in a computer, enables the computer to execute the method in any abovementioned aspect or each implementation mode thereof.

In the embodiments of the disclosure, the MSC sent to the network device by the terminal is used to transmit the partial information of the first parameter, thereby implementing transmission of the first parameter occupying more bits, and/or spare bits in the first parameter may be occupied by other parameters, thereby implementing transmission of more parameters.

### BRIEF DESCRIPTION OF THE DRAWINGS

In order to clearly describe the technical solutions of the embodiments of the disclosure, the drawings required in description for the embodiments or a conventional art will be simply introduced below. It is apparent that the drawings described below only illustrate some embodiments of the disclosure. Other drawings may also be obtained by those skilled in the art according to these drawings without creative work.
FIG. 1 is a schematic diagram of a wireless system according to an embodiment of the disclosure.
FIG. 2 is a schematic diagram of a random access process according to an embodiment of the disclosure.
FIG. 3 is a schematic flowchart of a method for wireless communication according to an embodiment of the disclosure.
FIG. 4 is a schematic diagram of an MSG3 according to an embodiment of the disclosure.
FIG. 5 is a schematic diagram of an MSG3 according to an embodiment of the disclosure.
FIG. 6 is a schematic flowchart of a method for wireless communication according to an embodiment of the disclosure.
FIG. 7 is a schematic flowchart of a method for wireless communication according to an embodiment of the disclosure.
FIG. 8 is a schematic flowchart of a method for wireless communication according to an embodiment of the disclosure.
FIG. 9 is a schematic flowchart of a method for wireless communication according to an embodiment of the disclosure.
FIG. 10 is a schematic block diagram of a terminal according to an embodiment of the disclosure.
FIG. 11 is a schematic block diagram of a network device according to an embodiment of the disclosure.
FIG. 12 is a schematic block diagram of a system chip according to an embodiment of the disclosure.
FIG. 13 is a schematic block diagram of a communication device according to an embodiment of the disclosure.
FIG. 14 is a schematic block diagram of a communication system according to an embodiment of the disclosure.

### DETAILED DESCRIPTION

The technical solutions in the embodiments of the disclosure will be described below in combination with the drawings in the embodiments of the disclosure. It is apparent that the described embodiments are a part rather than all embodiments of the disclosure. All other embodiments obtained by those skilled in the art based on the embodiments in the disclosure without creative work shall fall within the scope of protection of the disclosure.

The technical solutions of the embodiments of the disclosure may be applied to various communication systems, for example, a Global System of Mobile Communication (GSM), a Code Division Multiple Access (CDMA) system, a Wideband Code Division Multiple Access (WCDMA) system, a General Packet Radio Service (GPRS), an Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system or a future 5G system (which may also be called a New Radio (NR) system).

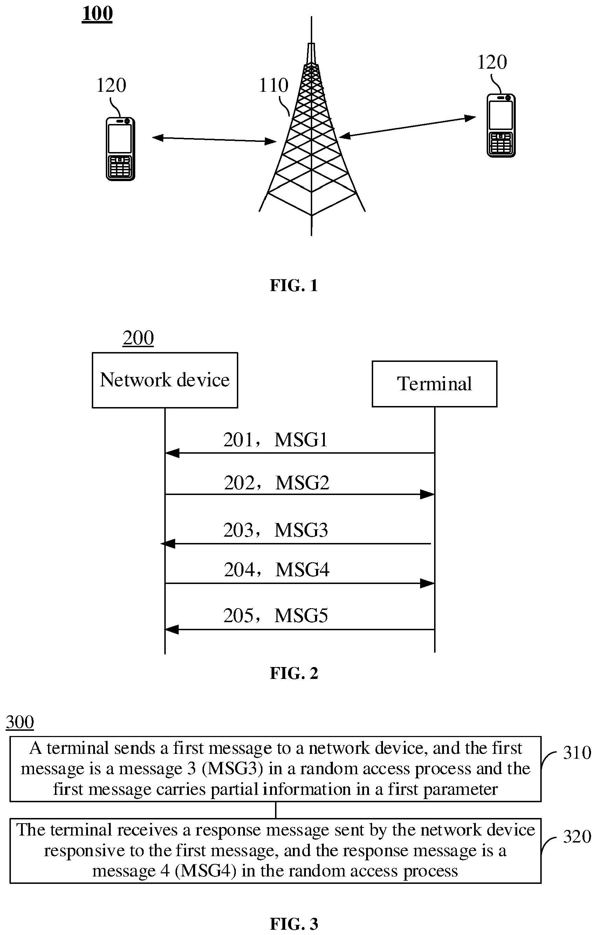

FIG. 1 illustrates a wireless communication system 100 to which the embodiments of the disclosure are applied. The wireless communication system 100 may include a network device 110. The network device 100 may be a device communicating with a terminal. The network device 100 may provide communication coverage in a specific geographical region and may communicate with a terminal (for example User Equipment (UE)) in the coverage. Optionally, the network device 100 may be a Base Transceiver Station (BTS) in the GSM or the CDMA system, may also be a NodeB (NB) in the WCDMA system, and may also be an Evolutional Node B (eNB or eNodeB) in the LTE system or a wireless controller in a Cloud Radio Access Network (CRAN). Alternatively, the network device may be a relay station, an access point, an in-vehicle device, a wearable device, a network-side device in a future 5G network, a network device in a future evolved Public Land Mobile Network (PLMN) or the like.

The wireless communication system 100 further includes at least one terminal 120 within the coverage of the network device 110. The terminal 120 may be mobile or fixed. Optionally, the terminal 120 may refer to an access terminal, UE, a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device, another processing device connected to a wireless modem, a vehicle device, a wearable device, a terminal in the 5G network, a terminal in the future evolved PLMN or the like.

Optionally, Device to Device (D2D) communication may be performed between the terminas 120.

Optionally, the 5G system or network may also be referred to as a New Radio (NR) system or network.

A network device and two terminals are exemplarily shown in FIG. 1. Optionally, the wireless communication system 100 may include multiple network devices, and the number of terminals in coverage of each network device may be different from two, which are not limited in the embodiments of the disclosure.

Optionally, the wireless communication system 100 may further include another network entity such as a network controller and a mobility management entity, which is not limited in the embodiments of the disclosure.

It is to be understood that the terms "system" and "network" in the disclosure may usually be exchanged in the disclosure. In the disclosure, the term "and/or" is only used for describing an association relationship between associated objects, and represents that three relationships may exist. For example, A and/or B may represent three conditions of only A, both A and B and only B. In addition, the character "/" in the disclosure usually represents an "or" relationship between previous and next associated objects.

FIG. 2 is a schematic flowchart of a random access process according to an embodiment of the disclosure.

In 201, a terminal sends a message 1 (MSG1) to a network device. The MSG1 may carry a random access preamble.

In 202, upon receiving the MSG1 sent by the terminal, the network device may send a response message, i.e., an MSG2, in response to the MSG1.

Optionally, the network device may calculate a Random Access Radio Network Temporary Identifier (RA-RNTI) according to a resource position of the MSG1 and scramble the MSG2 by using RA-RNTI.

Optionally, the network device may carry an Uplink (UL) grant in the MSG2 to indicate a resource occupied by a message 3 (MSG3) sent by the terminal.

In 203, upon receiving the MSG2, the terminal may send a message 3 (MSG3) to the network device according to the MSG2.

Optionally, the terminal may acquire an RA-RNTI according to the resource position of the MSG1 and descramble the MSG2 using the RA-RNTI.

Optionally, the terminal may send the MSG3 according to the UL grant in the MSG2.

Optionally, the MSG3 may carry identification information of the terminal and the like.

In 204, upon receiving the MSG3 sent by the terminal, the network device may send a message 4 (MSG4) to the terminal according to the MSG3.

Optionally, the network device may carry in the MSG4 information in one or more parameters in the MSG3, so that the terminal can recognize that the MSG3 is sent for the terminal.

In 205, upon receiving the MSG4 and determining that the MSG4 is sent for the terminal, the terminal may send a message 5 (MSG5) to the network device according to the MSG4.

With development of communication systems, it is desired to carry more parameters in the MSG3, or a greater length of a parameter is desired.

For example, the MSG3 may carry identification information of a terminal, and the identification information may be a 5G-S-TMSI. The number of bits occupied by the 5G-S-TMSI may be greater than the number of bits occupied by an S-TMSI in the LTE system. For example, 40 bits in LTE may be extended to 48 bits.

The S-TMSI may be abbreviated from an SAE temporary mobile subscriber identity.

Optionally, in the embodiments of the disclosure, the 5G-S-TMSI may include an Access and Mobility Management Function (AMF) set ID, an AMF pointer and a 5G-TMSI. The AMF set ID and the AMF pointer indicate AMF information, and the 5G-TMSI is a unique UE ID in an AMF.

It is to be understood that the 5G-S-TMSI may also have other names, and any information including the above information parameter falls within the scope of protection of the disclosure.

For example, the number of bits occupied by an establishment cause value carried in the MSG in the 5G system may be greater than 3, and the number is, for example, is not less than 8 bits and even reaches 16 bits.

In addition, for supporting network slices in the 5G system, an ID of a slice may also be required to be carried in the MSG. The ID of the network slice may at least include, for example, 24 bits, which is a higher load for the MSG3.

However, only a limited number of bits may be transmitted through the MSG3 under the limit of a size of a Common Control Channel (CCCH) Servicing Data Unit (SDU).

In view of this, the embodiments of the disclosure provide the following method and device to solve the problem.

FIG. 3 is a schematic flowchart of a method 300 for wireless communication according to an embodiment of the disclosure. The method 300 includes at least part of contents in the following contents.

In 310, a terminal sends a first message to a network device. The first message is an MSG3 in a random access process, and the first message carries partial information in a first parameter.

Optionally, in the embodiment of the disclosure, the first parameter is identification information of the terminal, or a parameter used to indicate a network slice where the terminal is located, or an establishment cause value in the MSG3 or an Inactive Radio Network Temporary Identity (I-RNTI).

Optionally, in the embodiment of the disclosure, the identification information is an S-TMSI or a 5G-S-TMSI.

Optionally, the S-TMSI or the 5G-S-TMSI may include information of a target core network device of a Non-Access-Stratum (NAR) message sent by the terminal and information used to identify the terminal.

It is to be understood that the S-TMSI and the 5G-S-TMSI may also have other names, and any information including the above two parts of information falls within the scope of protection of the disclosure.

Optionally, in the embodiment of the disclosure, the total number of bits occupied by the identification information is 40 bits or 48 bits.

Optionally, in the embodiment of the disclosure, the first parameter is the identification information of the terminal, and the partial information in the first message is information, except the information of the target core network device of the NAS message of the terminal, in the identification information of the terminal.

Specifically, the 5G-S-TMSI consists of different fields, including bits indicating a core network device and an Access and Mobility Management Function (AMF). Since these bits may be common for many terminals, only the information except the information of bits may be transmitted through the MSG3.

In other words, low-order bits, for example, low 40 bits, in the 5G-S-TMSI are reserved. Therefore, these bits are unique in the AMF, and a collision probability may not be increased by segmentation. For the S-TMSI of 40 bits in the LTE system, high-order bits (i.e., bits of information for identifying a Mobility Management Entity (MME)) may not be transmitted through the MSG3, to avoid increase of the collision probability in the access process.

Optionally, the information used to identify the core network device may be a Global Unique Mobility Management Entity Identifier (GUMMEI), or may also be a Globally Unique AMF Identifier (GUAMI).

It is to be understood that the 5G-S-TMSI or S-TMSI in the embodiment of the disclosure may also include other number of bits, except 48 bits and 40 bits, which is not limited in the embodiment of the disclosure.

Optionally, in the embodiment of the disclosure, when the terminal does not store the 5G-S-TMSI or the S-TMSI, the identification information may also be a random number. In this case, a short random number may be generated. For example, the bit number of the random number may be the number of bits occupied by the 5G-S-TMSI or the S-TMSI.

In practical, in the embodiment of the disclosure, a random number occupying a large number of bits may also be generated, but only a part of bits of the random number are transmitted through the MSG3.

Optionally, in the embodiment of the disclosure, a second parameter may also be transmitted through the MSG3. The second parameter includes a parameter used to indicate the network slice accessed by the terminal, or the establishment cause value in the MSG3 or the I-RNTI.

The I-RNTI may be an inactive radio network temporary identity (I-RATI). For example, the RNTI may be a cell radio network temporary identifier.

Optionally, in the embodiment of the disclosure, the parameter used to indicate the network slice accessed by the terminal may be Single Network Slice Selection Assistance Information (S-NSSAI).

Optionally, in the embodiment of the disclosure, the first message further includes partial or whole information of the second parameter.

Optionally, in the embodiment of the disclosure, bits occupied by the establishment cause value in the MSG3 are greater than 3 bits.

Optionally, in the embodiment of the disclosure, the number of bits occupied by the parameter used to indicate the network slice where the terminal is located in the MSG3 is 24. In practical, the number of bits occupied by the parameter used to indicate the network slice where the terminal is located may also be a different number, which is not limited in the embodiment of the application.

Optionally, in the embodiment of the disclosure, the first message is a message used to indicate a radio resource control (RRC) connection request or an RRC request.

For example, the first message may be the RRC connection request or the RRC request.

In 320, the terminal receives a response message sent by the network device responsive to the first message. The response message is a message 4 (MSG4) in the random access process.

Optionally, in the embodiment of the disclosure, the first parameter is the identification information of the terminal, and the terminal determines that the response message is responsive to the first message sent by the terminal according to the fact that the partial information of the identification information is carried in the response message.

Specifically, upon receiving the MSG3 sent by the terminal, the network device may carry the partial information of the identification information in the MSG3 in the MSG4, and the terminal may determine that the MSG4 is sent for the terminal according to the partial information carried in the MSG4.

Optionally, in the embodiment of the disclosure, the terminal sends a second message to the network device. The second message carries other information, except the partial information, in the first parameter.

Optionally, the first parameter includes the identification information of the terminal, and the other information in the second message is the information which is used to identify the target core network device of the NAS message sent by the terminal.

Therefore, the terminal may determine the identification information of the terminal according to the information in the first message and the information in the second message.

It is to be understood that, in the embodiment of the disclosure, the identification information of the terminal may be segmented according to the information used to identify the target core network device and the other information, and the identification information may also be segmented according to another manner, which is not limited in the embodiment of the disclosure.

It is to be understood that, in the embodiment of the disclosure, the other information of the identification information may also not be carried in the second message. For example, if information GUMMAI in the first message is not transmitted, the information may not be transmitted.

It is also to be understood that the second message may also carry the whole information of the identification information of the terminal.

For example, the first message carries partial information of the S-TMSI or the 5G-S-TMSI, and the second message carries the whole information of the S-TMSI or the 5G-S- TMSI.

Optionally, in the embodiment of the disclosure, the second message is a message 5 (MSG5) in the random access process.

Optionally, in the embodiment of the disclosure, the second message is a message used to indicate RRC connection setup completion, RRC connection resume completion, RRC setup completion or RRC resume completion.

Optionally, in the embodiment of the disclosure, the MSG5 may be RRC connection setup complete, or RRC setup complete, or RRC resume complete or RRC connection resume complete.

Optionally, in the embodiment of the disclosure, an access network device presently accessed by the terminal is an access network device of the LTE system, and a core network device presently accessed by the terminal is a core network device of the 5G system.

It is to be understood that the embodiment of the disclosure is not limited thereto. For example, the access network device presently accessed by the terminal is an access network device of the 5G system, and the core network device presently accessed by the terminal is the core network device of the 5G system.

Alternatively, the access network device presently accessed by the terminal is the access network device of the LTE system, and the core network device presently accessed by the terminal is a core network device of the LTE system.

Alternatively, the access network device presently accessed by the terminal is the access network device of the 5G system, and the core network device presently accessed by the terminal is the core network device of the LTE system.

For understanding the disclosure more clearly, the embodiment of the disclosure will be described below in detail in combination with some examples.

In the following embodiments, some circumstances of transformation from the LTE system to the 5G system are considered. For example:

For example, the number of the bits occupied by the 5G-S-TMSI may be greater than the number of the bits occupied by the S-TMSI in the LTE system. For example, the number of the bits occupied by the 5G-S-TMSI may be extended to 48 bits from 40 bits in the LET system.

For example, the number of bits occupied by the establishment cause value in the MSG in the 5G system may be greater than 3. For example, the number of bits is not less than 8 bits and even reaches 16 bits.

In addition, for supporting network slices in the 5G system, an ID of a slice may also be required to be carried in the MSG. The ID of the network slice may at least include, for example, 24 bits, which is a higher load for the MSG3.

### First Embodiment

In the embodiment, the S-NSSAI and an establishment cause occupying more bits are not considered, and only how to support a large 5G-S-TMSI is considered. A UE ID is segmented to reduce occupation in the MSG3.

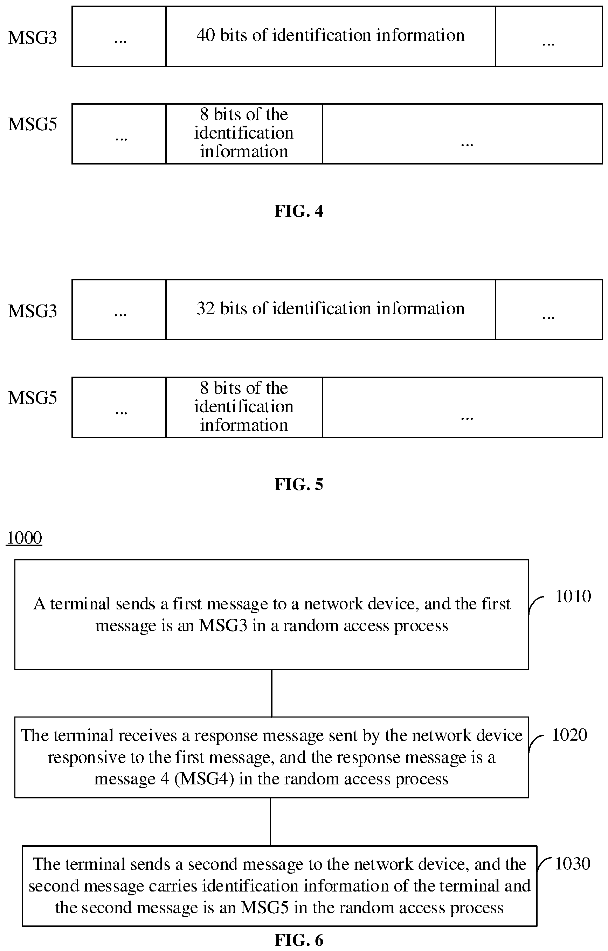

For example, as shown in FIG. 4, for the 5G-S-TMSI of 48 bits, the first 40 bits may be placed in the MSG3, and the other 8 bits are placed in the MSG5. The 48 bits may also be allocated according to another manner. For example, 24 bits are placed in the MSG3, and 24 bits are placed in the MSG5. In this way, the bits remained in a UE ID field may be used to transmit the establishment cause or another parameter.

### Second Embodiment

In the embodiment, the establishment cause is considered, and a size change of the 5G-S-TMSI and the S-NSSAI are not considered. Due to increase of the cause, more but not too many bits are required. For example, only one bit is added. In this case, spare bits in the MSG3 may be occupied, or the UE ID of 40 bits may also be segmented. For example, as shown in FIG. 5, 32 bits are placed in the MSG3 and 8 bits are placed in the MSG5.

### Third Embodiment

In the embodiment, only the S-NSSAI is considered. Since the S-NSSAI may occupies 24 bits, if the UE ID is segmented for transmission of the S-NSSAI through the MSG3, segmentation into 24bits and 24 bits may be used as required.

### Fourth Embodiment

The S-NSSAI, the establishment cause occupying more bits and the large 5G-S-TMSI may be considered together. When the size of the MSG3 is limited, the 5G-S-TMSI may be segmented to meet the requirement that the other parameters are included in the MSG3.

For parameter segmentation in all of the above embodiments, segmentation may be started from a Most Significant Bit (MSB) or a Least Significant Bit (LSB).

It has been described above that the first message carries the partial information of the first parameter. The first parameter may be, for example, the S-TMSI or the 5G-S-TMSI. However, it is to be understood that the embodiment of the disclosure is not limited thereto.

Descriptions will be made below in combination with FIG. 6.

FIG. 6 is a schematic flowchart of a method 1000 according to an embodiment of the disclosure. As shown in FIG. 6, the method 1000 includes at least part of the following contents.

In 1010, a terminal sends a first message to a network device. The first message is an MSG3 in a random access process.

In 1020, the terminal receives a response message sent by the network device responsive to the first message. The response message is a message 4 (MSG4) in the random access process.

In 1030, the terminal sends a second message to the network device. The second message carries identification information of the terminal and the second message is an MSG5 in the random access process.

Optionally, in the embodiment of the disclosure, the identification information of the terminal is an S-TMSI or 5G-S-TMSI of the terminal.

Optionally, in the embodiment of the disclosure, the first message carries a random number.

Optionally, in the embodiment of the disclosure, the number of bits occupied by the random number is less than the number of bits occupied by the identification information. For example, the random number occupies 40 bits, and the identification information occupies 48 bits.

Optionally, in the embodiment of the disclosure, the network device may carry the random number in the MSG4 for the terminal to recognize that the MSG4 is sent for the terminal.

Optionally, in the embodiment of the disclosure, before the first message is sent, the identification information is stored in the terminal.

For example, even though the S-TMSI or the 5G-S-TMSI is stored in the terminal before the MSG3 is sent, the terminal may also send the random number in the MSG3.

Optionally, in the embodiment of the disclosure, the first message carries at least one of the following parameters: a parameter used to indicate a network slice accessed by the terminal, or an establishment cause value in the MSG3 or an I-RNTI.

Optionally, in the embodiment of the disclosure, the number of bits occupied by the establishment cause value is greater than 3 bits; and/or, the number of bits occupied by the parameter used to indicate the network slice where the terminal is located is 24 bits.

It is to be understood that regarding specific implementation of the method 1000, reference may be made to descriptions (for example, explanations about terms and extended implementation modes) of the method 300. For simplicity, the implementation of the method 1000 will not be elaborated herein.

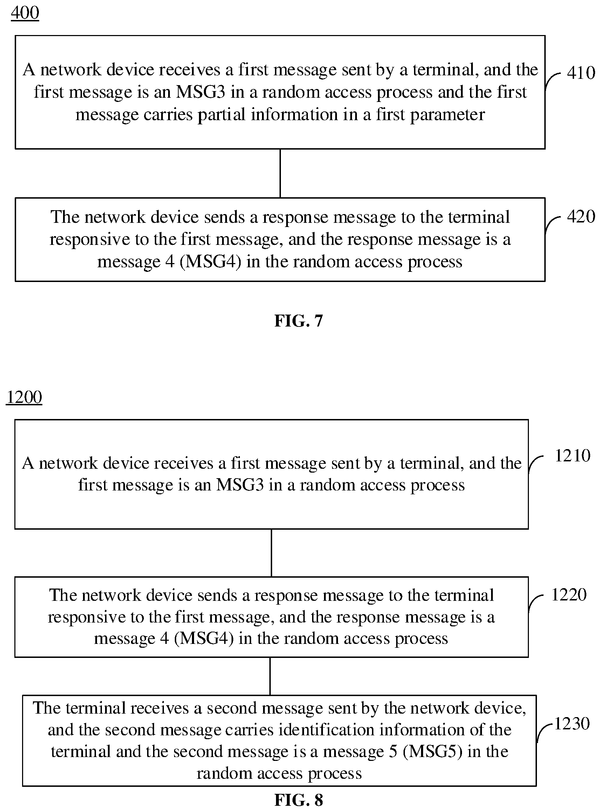

FIG. 7 is a schematic flowchart of a method 400 for wireless communication according to an embodiment of the disclosure. As shown in FIG. 7, the method 400 includes at least part of the following contents.

In 410, a network device receives a first message sent by a terminal. The first message is a message 3 (MSG3) in a random access process, and the first message carries partial information in a first parameter.

In 420, the network device sends a response message to the terminal responsive to the first message. The response message is a message 4 (MSG4) in the random access process.

Optionally, in the embodiment of the disclosure, the network device receives a second message sent by the terminal. The second message carries other information, except the partial information, in the first parameter.

Optionally, in the embodiment of the disclosure, the second message is a message 5 (MSG5) in the random access process.

Optionally, in the embodiment of the disclosure, the first parameter is: identification information of the terminal, or a parameter used to indicate a network slice where the terminal is located, or an establishment cause value in the MSG3 or an I-RNTI.

Optionally, in the embodiment of the disclosure, the identification information is an S-TMSI or 5G-S-TMSI of the terminal.

Optionally, in the embodiment of the disclosure, the first parameter is the identification information of the terminal, and the response message carries the partial information of the identification information.

Optionally, in the embodiment of the disclosure, the first parameter is the identification information of the terminal, and the partial information in the first message is information, except the information of the target core network device of the NAS message of the terminal, in the identification information of the terminal.

Optionally, in the embodiment of the disclosure, the total number of bits required to be occupied by the identification information is 48 bits.

Optionally, in the embodiment of the disclosure, the first parameter is the identification information of the terminal, and the other information in the second message is the information used to identify the target core network device of the NAS message sent by the terminal.

Optionally, in the embodiment of the disclosure, the first message further includes partial or whole information of a second parameter.

Optionally, in the embodiment of the disclosure, the second parameter includes the parameter used to indicate the network slice accessed by the terminal, or the establishment cause value in the MSG3 or the I-RNTI.

Optionally, in the embodiment of the disclosure, the number of bits occupied by the establishment cause value is more than 3 bits; and/or, the number of bits occupied by the parameter used to indicate the network slice where the terminal is located is 24 bits.

Optionally, in the embodiment of the disclosure, the first message is a message used to indicate an RRC connection request or an RRC request.

Optionally, in the embodiment of the disclosure, the second message is a message used to indicate RRC connection setup completion, RRC connection resume completion, RRC setup completion or RRC resume completion.

Optionally, in the embodiment of the disclosure, an access network device presently accessed by the terminal is an access network device of the LTE system, and a core network device presently accessed by the terminal is a core network device of a 5G system.

It is to be understood that regarding the method 400, reference may be made to descriptions in the method 300. For simplicity, the method 400 will not be elaborated herein.

FIG. 8 is a schematic flowchart of a method 1200 for wireless communication according to an embodiment of the disclosure.

As shown in FIG. 8, the method 1200 includes at least part of the following contents.

In 1210, a network device receives a first message sent by a terminal. The first message is a message 3 (MSG3) in a random access process.

In 1220, the network device sends a response message to the terminal responsive to the first message. The response message is a message 4 (MSG4) in the random access process.

In 1230, the terminal receives a second message sent by the network device. The second message carries identification information of the terminal, and the second message is a message 5 (MSG5) in the random access process.

Optionally, in the embodiment of the disclosure, the identification information of the terminal is an S-TMSI or 5G-S-TMSI of the terminal.

Optionally, in the embodiment of the disclosure, the first message carries a random number.

Optionally, in the embodiment of the disclosure, the number of bits occupied by the random number is less than the number of bits occupied by the identification information.

Optionally, in the embodiment of the disclosure, the first message carries at least one of the following parameters: a parameter used to indicate a network slice accessed by the terminal, or an establishment cause value in the MSG3 or an I-RNTI.

Optionally, in the embodiment of the disclosure, the number of bits occupied by the establishment cause value is greater than 3 bits; and/or the number of bits occupied by the parameter used to indicate the network slice where the terminal is located may be 24 bits.

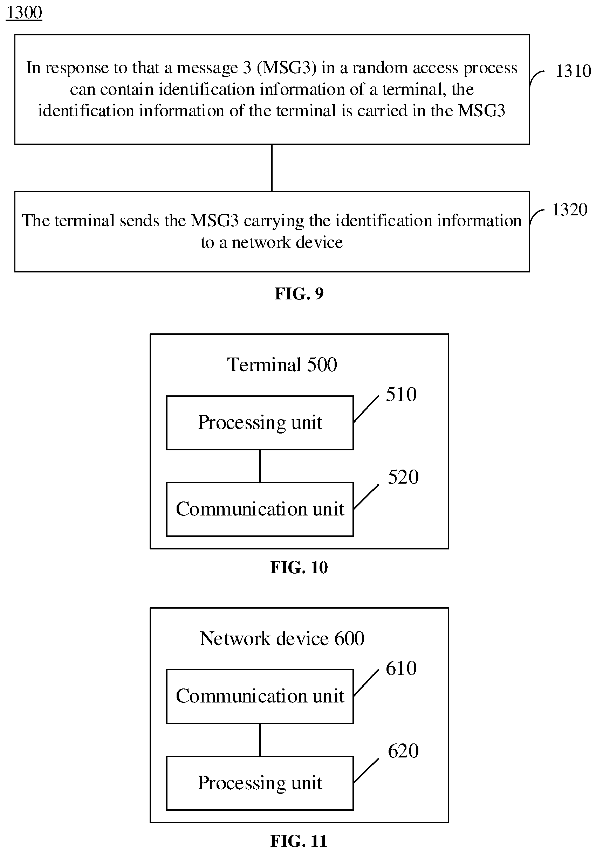

FIG. 9 is a schematic flowchart of a method 1300 for wireless communication according to an embodiment of the disclosure. The method 1300 includes at least part of contents in the following contents.

In 1310, in response to that a message 3 (MSG3) in a random access process can contain identification information of a terminal, the identification information of the terminal is carried in the MSG3.

Specifically, in response to that the MSG3 may carry more bits, the identification information of the terminal may be carried in the MSG3. The identification information in the MSG3 may be the whole identification information which is not segmented.

In 1320, the terminal sends the MSG3 carrying the identification information to a network device.

Optionally, in the embodiment of the disclosure, the identification information is an I-RNTI of the terminal.

Specifically, when the terminal is switched from the inactive state to another state (for example, a connected state or an active state), the I-RNTI of the terminal may be carried in the MSG3 in the random access process to identify the terminal.

Optionally, in the embodiment of the disclosure, the identification information of the terminal is a resume identifier (ID) of the terminal.

Specifically, when the terminal is in a suspended state and is required to be resumed, the resume ID of the terminal may be carried in the MSG3 in the random access process.

Optionally, in the embodiment of the disclosure, the method 1300 is applied to a first system, an access network device of the first system is an LTE access network device, and a core network device of the first system is a 5G core network (5GC) device.

Optionally, in the embodiment of the disclosure, in response to that the method is applied to the first system, a length of the identification information of the terminal is less than a length of the identification information, carried in the MSG3, of the terminal in a second system. An access network device of the second system is an NR access network device, and a core network device of the second system is a 5GC device.

Optionally, in the embodiment of the disclosure, the identification information includes first identification information of the access network device and second identification information used to indicate that the terminal is in the access network device. The first identification information is identification information of the LTE access network device.

Optionally, in the embodiment of the disclosure, if the method is applied to the first system, the number of bits occupied by the identification information is less than 52 bits.

In the first system, the identification information of the terminal may be 40 bits. The length of the first identification information may be 20 bits, and the length of the second identification information may be 20 bits.

Optionally, in the embodiment of the disclosure, the method 1300 is applied to the second system, the access network device of the second system is the NR access network device, and the core network device of the second system is the 5GC device.

If the method is applied to the second system, the identification information of the terminal may include 52 bits or may be less than 52 bits.

FIG. 9 illustrates a method for wireless communication, another method for wireless communication will be provided below, and the method and the method 1300 may be parallel methods. The method is applied to a first system, an access network device of the first system is an LTE access network device, and a core network device of the first system is a 5GC device. The method includes the following contents.

For a terminal side, a terminal sends an MSG3 to a network device. The MSG3 includes identification information of the terminal, and the length of the identification information is less than 52 bits or less than the length of the identification information, carried in the MSG3, of the terminal in a second system. An access network device of the second system is an NR access network device, and a core network device of the second system is a 5GC device. The terminal receives a message 4 (MSG4) sent by the network device for the MSG3.

For a network side, the network device receives the MSG3 sent by the terminal. The MSG3 includes the identification information of the terminal, and the length of the identification information is less than 52 bits or less than the length of the identification information, carried in the MSG3, of the terminal in the second system. The access network device of the second system is the NR access network device and the core network device of the second system is the 5GC device. The network device sends the MSG4 to the network device for the MSG3.

Optionally, in the embodiment of the disclosure, the identification information is an I-RNTI of the terminal.

Specifically, when the terminal is switched from the inactive state to another state (for example, a connected state or an active state), the I-RNTI of the terminal may be carried in the MSG3 in a random access process to identify the terminal.

Optionally, in the embodiment of the disclosure, the identification information of the terminal is a resume ID of the terminal.

Specifically, when the terminal in a suspended state is required to be resumed, the resume ID of the terminal may be carried in the MSG3 in the random access process.

Optionally, in the embodiment of the disclosure, the identification information includes first identification information of the access network device and second identification information used to indicate that the terminal is in the access network device. The first identification information is identification information of the LTE access network device.

In the first system, the identification information of the terminal may include 40 bits, the length of the first identification information may include 20 bits, and the length of the second identification information may include 20 bits.

In the embodiment of the disclosure, in the system in which the access network device is the LTE access network device and the core network device is the 5GC device, the identification information of the terminal carried in the MSG3 is less than 52 bits or less than the length of the identification information of the terminal carried in the MSG3 in the second system. The access network device of the second system is the NR access network device and the core network device of the second system is a 5GC device. The terminal receives the message 4 (MSG4) sent by the network device for the MSG3. Therefore, the number of bits carried in the MSG 3 can be reduced.

FIG. 10 is a schematic block diagram of a terminal 500 according to an embodiment of the disclosure. As illustrated in FIG. 10, the terminal 500 includes a processing unit 510 and a transceiver unit 520.

Optionally, the processing unit 510 is configured to generate a first message. The first message is a message 3 (MSG3) in a random access process, and the first message carries partial information in a first parameter.

The transceiver unit 520 is configured to send the first message to a network device. The first message is the message 3 (MSG3) in the random access process, and the first message carries the partial information in the first parameter. The transceiver unit 520 is further configured to receive a response message sent by the network device responsive to the first message. The response message is a message 4 (MSG4) in the random access process.

Optionally, in the embodiment of the disclosure, the transceiver unit 520 is configured to send a second message to the network device. The second message carries other information, except the partial information, in the first parameter.

Optionally, in the embodiment of the disclosure, the second message is a message 5 (MSG5) in the random access process.

Optionally, in the embodiment of the disclosure, the first parameter is: identification information of the terminal, or a parameter used to indicate a network slice where the terminal is located, or an establishment cause value in the MSG3 or an I-RNTI.

Optionally, in the embodiment of the disclosure, the identification information is an S-TMSI or 5G-S-TMSI of the terminal.

Optionally, in the embodiment of the disclosure, the first parameter is the identification information of the terminal, and the processing unit 510 is further configured to determine that the response message is responsive to the first message sent by the terminal according to the partial information of the identification information being carried in the response message.

Optionally, in the embodiment of the disclosure, the first parameter is the identification information of the terminal, and the partial information in the first message is information, except the information of the target core network device in the NAS message of the terminal, in the identification information of the terminal.

Optionally, in the embodiment of the disclosure, the total number of bits required to be occupied by the identification information is 48 bits.

Optionally, in the embodiment of the disclosure, the first parameter is the identification information of the terminal, and the other information carrying in the second message is the information which is used to identify the target core network device of the NAS message sent by the terminal.

Optionally, in the embodiment of the disclosure, the first message further includes partial or whole information of a second parameter.

Optionally, in the embodiment of the disclosure, the second parameter includes the parameter used to indicate the network slice accessed by the terminal, or the establishment cause value carried in the MSG3 or the I-RNTI.

Optionally, in the embodiment of the disclosure, the number of bits occupied by the establishment cause value is greater than 3 bits; and/or, the number of bits occupied by the parameter used to indicate the network slice where the terminal is located is 24 bits.

Optionally, in the embodiment of the disclosure, the first message is a message used to indicate an RRC connection request or an RRC request.

Optionally, in the embodiment of the disclosure, the second message is a message used to indicate RRC connection setup completion, RRC connection resume completion, RRC setup completion or RRC resume completion.

Optionally, in the embodiment of the disclosure, an access network device presently accessed by the terminal is an access network device of an LTE system, and a core network device presently accessed by the terminal is a core network device of a 5G system.

It is to be understood that the terminal may implement the corresponding operations implemented by the terminal in the method 300 and the terminal will not be elaborated herein for simplicity.

Optionally, the terminal 500 in the embodiment of the disclosure may further implement the operations implemented by the terminal in the method 1000.

Optionally, in the embodiment of the disclosure, the processing unit 510 is configured to generate a first message. The first message is a message 3 (MSG3) in a random access process.

The transceiver unit 520 is configured to send the first message and receive a response message sent by a network device responsive to the first message. The response message is a message 4 (MSG4) in the random access process.

The processing unit 510 is further configured to generate a second message. The second message carries identification information of the terminal, and the second MSG is a message 5, MSG5, in the random access process.

The transceiver unit 520 is further configured to send the second message to the network device. The second message carries the identification information of the terminal, and the second message is the message 5 (MSG5) in the random access process.

Optionally, in the embodiment of the disclosure, the identification information of the terminal is an S-TMSI or 5G-S-TMSI of the terminal.

Optionally, in the embodiment of the disclosure, the first message carries a random number.

Optionally, in the embodiment of the disclosure, the number of bits occupied by the random number is less than the number of bits occupied by the identification information.

Optionally, in the embodiment of the disclosure, before the first message is sent, the identification information is stored in the terminal.

Optionally, in the embodiment of the disclosure, the first message carries at least one of the following parameters: a parameter used to indicate a network slice accessed by the terminal, or an establishment cause value in the MSG3 or an I-RNTI.

Optionally, in the embodiment of the disclosure, the number of bits occupied by the establishment cause value are greater than 3 bits; and/or, the number of bits occupied by the parameter used to indicate the network slice where the terminal is located may be 24 bits.

Optionally, the terminal 500 in the embodiment of the disclosure may further implement the operations implemented by the terminal in the method 1300.

Optionally, the processing unit is configured to, when a message 3 (MSG3) in a random access process can contain identification information of a terminal, carry the identification information of the terminal in the MSG3.

The transceiver unit is configured to send the MSG3 carrying the identification information to a network device.

Optionally, the identification information is an I-RNTI of the terminal.

Optionally, the identification information is a resume identifier (RESUME ID) of the terminal.

Optionally, the terminal is applied to a first system, an access network device of the first system is an LTE access network device, and a core network device of the first system is a 5GC device.

Optionally, the length of the identification information of the terminal is less than the length of the identification information, carried in the MSG3, of the terminal in a second system. An access network device of the second system is an NR access network device, and a core network device of the second system is a 5GC device.

Optionally, the identification information includes first identification information of the access network device and second identification information used to indicate that the terminal is in the access network device. The first identification information is identification information of the LTE access network device.

Optionally, the number of bits occupied by the identification information is less than 52 bits.

Optionally, the terminal is applied to the second system, the access network device of the second system is the NR access network device, and the core network device of the second system is the 5GC device.

FIG. 11 is a schematic block diagram of a network device 600 according to an embodiment of the disclosure. As shown in FIG. 11, the network device 600 includes a transceiver unit 610 and a processing unit 620.

The transceiver unit 610 is configured to receive a first message sent by a terminal. The first message is a message 3 (MSG3) in a random access process, and the first message carries partial information in a first parameter.

The processing unit 620 is configured to generate a response message responsive to the first message. The response message is a message 4 (MSG4) in the random access process.

The transceiver unit 610 is further configured to send the response message to the terminal.

Optionally, in the embodiment of the disclosure, the transceiver unit 610 is further configured to receive a second message sent by the terminal. The second message carries other information, except the partial information, in the first parameter.

Optionally, in the embodiment of the disclosure, the second message is a message 5 (MSG5) in the random access process.

Optionally, in the embodiment of the disclosure, the first parameter is: identification information of the terminal, or a parameter used to indicate a network slice where the terminal is located, or an establishment cause value in the MSG3 or an I-RNTI.

Optionally, in the embodiment of the disclosure, the identification information is an S-TMSI or 5G-S-TMSI of the terminal.

Optionally, in the embodiment of the disclosure, the first parameter is the identification information of the terminal, and the response message carries the partial information of the identification information.

Optionally, in the embodiment of the disclosure, the first parameter is the identification information of the terminal, and the partial information in the first message is information, except the information of the target core network device of the NAS message of the terminal, in the identification information of the terminal.

Optionally, in the embodiment of the disclosure, the total number of bits required to be occupied by the identification information is 48 bits.

Optionally, in the embodiment of the disclosure, the first parameter is the identification information of the terminal, and the other information carried in the second message is information which is used to identify the target core network device of the NAS message sent by the terminal.

Optionally, in the embodiment of the disclosure, the first message further includes partial or whole information of a second parameter.

Optionally, in the embodiment of the disclosure, the second parameter includes a parameter used to indicate the network slice accessed by the terminal, or the establishment cause value in the MSG3 or the I-RNTI.

Optionally, in the embodiment of the disclosure, the number of bits occupied by the establishment cause value are greater than 3 bits; and/or, the number of bits occupied by the parameter used to indicate the network slice where the terminal is located are 24 bits.

Optionally, in the embodiment of the disclosure, the first message is an message used to indicate an RRC connection request or an RRC request.

Optionally, in the embodiment of the disclosure, the second message is a message used to indicate RRC connection setup completion, RRC connection resume completion, RRC setup completion or RRC resume completion.

Optionally, in the embodiment of the disclosure, an access network device presently accessed by the terminal is an access network device of an LTE system, and a core network device presently accessed by the terminal is a core network device of a 5G system.

It is to be understood that the device may implement the corresponding operations implemented by the network device in the method 400, and will not be elaborated herein for simplicity.

Optionally, the network device 600 in the embodiment of the disclosure may further implement the operations implemented by the network device in the method 1200.

Optionally, in the embodiment of the disclosure, the transceiver unit 610 is configured to receive a first message sent by a terminal. The first message is a message 3 (MSG3) in a random access process.

The processing unit 620 is configured to generate a response message responsive to the first message. The response message is a message 4 (MSG4) in the random access process.

The transceiver unit 610 is further configured to send a response message to the terminal and receive a second message sent by the network device. The second message carries identification information of the terminal, and the second message is a message 5 (MSG5) in the random access process.

Optionally, in the embodiment of the disclosure, the identification information of the terminal is an S-TMSI or 5G-S-TMSI of the terminal.

Optionally, in the embodiment of the disclosure, the first message carries a random number.

Optionally, in the embodiment of the disclosure, the number of bits occupied by the random number is less than the number of bits occupied by the identification information.

Optionally, in the embodiment of the disclosure, the first message carries at least one of the following parameters: a parameter used to indicate a network slice accessed by the terminal, or an establishment cause value in the MSG3 or an I-RNTI.

Optionally, in the embodiment of the disclosure, the number of bits occupied by the establishment cause value are greater than 3 bits; and/or, the number of bits occupied by the parameter used to indicate the network slice where the terminal is located is 24 bits.

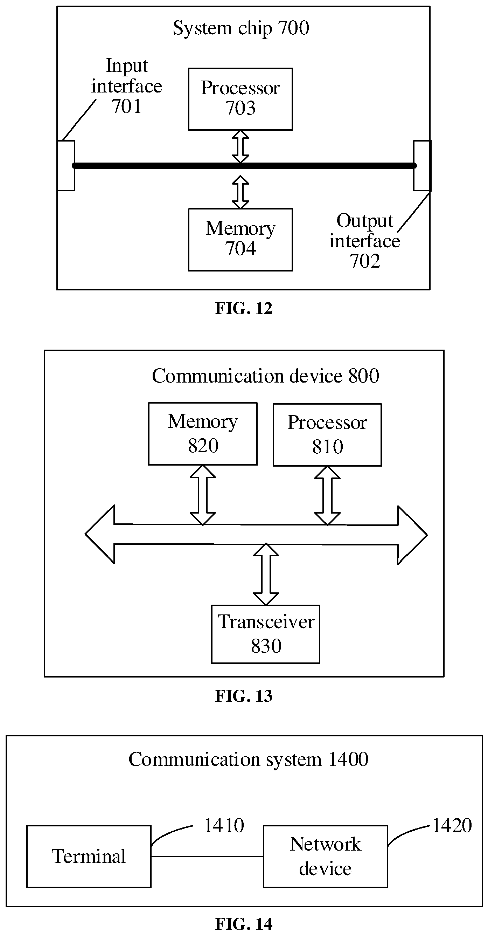

FIG. 12 is a schematic structure diagram of a system chip 700 according to an embodiment of the disclosure. The system chip 700 in FIG. 12 includes an input interface 701, an output interface 702, a processor 703 and a memory 704. The processor 703 and the memory 704 may be connected through an internal communication connection line. The processor 703 is configured to execute a code in the memory 704.

Optionally, when the code is executed, the processor 703 implements the method executed by the network device in the method embodiment. For simplicity, the method is not elaborated herein.

Optionally, when the code is executed, the processor 803 implements a method executed by a terminal in the method embodiment. For simplicity, the method is not elaborated herein.

FIG. 13 is a schematic block diagram of a communication device 800 according to an embodiment of the disclosure. As illustrated in FIG. 13, the communication device 800 includes a processor 810 and a memory 820. Herein, the memory 820 may store a program code, and the processor 810 may execute the program code stored in the memory 820.

Optionally, as illustrated in FIG. 13, the communication device 800 may include a transceiver 830, and the processor 810 may control the transceiver 830 for external communication.

Optionally, the processor 810 may call the program code stored in the memory 820 to execute corresponding operations of the network device in the method embodiment. For similarity, the operations are not elaborated herein.

Optionally, the processor 810 may call the program code stored in the memory 820 to execute corresponding operations of the terminal in the method embodiment. For similarity, the operations are not elaborated herein.

FIG. 14 is a schematic block diagram of a communication system 1400 according to an embodiment of the disclosure. As illustrated in FIG. 14, the communication system 1400 includes a terminal 1410 and a network device 1420.

The terminal 1410 may be configured to implement corresponding functions implemented by the terminal in the method 300, and the network device 1410 may be configured to implement corresponding functions implemented by the network device in the method 400. For simplicity, the functions are omitted herein.

Alternatively, the terminal 1410 may be configured to implement corresponding functions realized by the terminal in the method 1000, and the network device 1410 may be configured to implement corresponding functions implemented by the network device in the method 1200. For simplicity, the functions are omitted herein.

The terminal 1410 may include the terminal 500 in FIG. 10 or the communication device 800 in FIG. 13 and will not be elaborated herein for simplicity, and the network device 1420 may include the network device 600 in FIG. 11 or the communication device 800 in FIG. 13 and will not be elaborated herein for simplicity.

It should be understood that the processor in the embodiment of the disclosure may be an integrated circuit chip and has a signal processing capability. In an implementation process, each step of the method embodiment may be implemented by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or another programmable logical device, a discrete gate or a transistor logical device and a discrete hardware component. Each method, step and logical block diagram disclosed in the embodiments of the disclosure may be implemented or executed. The universal processor may be a microprocessor or the processor may also be any conventional processor and the like. The steps of the method disclosed in combination with the embodiments of the disclosure may be directly embodied to be executed and implemented by a hardware decoding processor or executed and implemented by a combination of hardware and software modules in the decoding processor. The software module may be located in a mature storage medium in this field such as a Random Access Memory (RAM), a flash memory, a Read-Only Memory (ROM), a Programmable ROM (PROM) or an Electrically Erasable PROM (EEPROM) and a register. The storage medium is provided in a memory, and the processor reads information in the memory, and implemented the steps of the methods in combination with hardware.

It can be understood that the memory in the embodiment of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It should be noted that the memory of a system and method described in the disclosure is intended to include, but be not limited to, memories of these and any other proper types.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization should not be considered to beyond the scope of the disclosure.

Those skilled in the art may clearly learn about that regarding specific operation processes of the system, device and unit described above, reference may be made to the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed components may be indirect coupling or communication connection between the device or the units through some interfaces, and may be electrical and mechanical or adopt other forms.

The units described as separate parts may or may not be physically separated, and parts displayed as units may or may not be physical units. That is, the units may be located in the same place, or may also be distributed to multiple network units. A part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the essential technical solutions of the disclosure substantially or parts of the disclosure making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the disclosure. The abovementioned storage medium includes: various media capable of storing program codes such as a U disk, a mobile hard disk, an ROM, an RAM, a magnetic disk or an optical disk.

The foregoing is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for wireless communication, comprising:
sending, by a terminal, a first message to a network device, wherein the first message is a message 3, MSG3, in a random access process and the first message carries partial information in a first parameter; and
receiving, by the terminal, a response message sent by the network device responsive to the first message, wherein the response message is a message 4, MSG4, in the random access process.

2. The method of claim 1, further comprising:
sending, by the terminal, a second message to the network device, wherein the second message carries other information, except the partial information, in the first parameter.

3. The method of claim 2, wherein the second message is a message 5, MSG5, in the random access process.

4. The method of any one of claims 1 to 3, wherein the first parameter is:
identification information of the terminal, or a parameter used to indicate a network slice where the terminal is located, or an establishment cause value carried in the MSG3 or an Inactive Radio Network Temporary Identity, I-RNTI.

5. The method of claim 4, wherein the identification information is a System Architecture Evolution, SAE, Temporary Mobile Subscriber Identity, S-TMSI, or 5th-Generation, 5G-S-TMSI of the terminal.

6. The method of claim 4 or 5, wherein the first parameter is the identification information of the terminal, and the method further comprises:
determining, by the terminal, that the response message is responsive to the first message sent by the terminal according to the partial information of the identification information being carried the response message.

7. The method of any one of claims 4 to 6, wherein the first parameter is the identification information of the terminal, and the partial information carried in the first message is information, except information of a target core network device of a Non-Access-Stratum, NAS, message of the terminal, in the identification information of the terminal.

8. The method of any one of claims 4 to 7, wherein a total number of bits required to be occupied by the identification information is 48 bits.

9. The method of claim 2 or 3, wherein the first parameter is the identification information of the terminal, and the other information carried in the second message is information, which is used to identify a target core network device of the NAS message sent by the terminal.

10. The method of any one of claims 1 to 9, wherein the first message further comprises partial or whole information of a second parameter.

11. The method of claim 10, wherein the second parameter comprises a parameter used to indicate a network slice accessed by the terminal, or an establishment cause value in the MSG3 or an I-RNTI.

12. The method of claim 11, wherein a number of bits occupied by the establishment cause value is greater than 3 bits; and/or,
a number of bits occupied by the parameter used to indicate the network slice where the terminal is located is 24 bits.

13. The method of any one of claims 1 to 12, wherein the first message is a message used to indicate a Radio Resource Control, RRC, connection request or an RRC request.

14. The method of claim 2 or 3, wherein the second message is a message used to indicate RRC connection setup completion, RRC connection resume completion, RRC setup completion or RRC resume completion.

15. The method of any one of claims 1 to 14, wherein an access network device presently accessed by the terminal is an access network device of a Long Term Evolution, LTE, system, and a core network device presently accessed by the terminal is a core network device of a 5G system.

16. A method for wireless communication, comprising:
receiving, by a network device, a first message sent by a terminal, wherein the first message is a message 3, MSG3, in a random access process, and the first message carries partial information in a first parameter; and
sending, by the network device, a response message to the terminal responsive to the first message, wherein the response message is a message 4, MSG4 in the random access process.

17. The method of claim 16, further comprising:
receiving, by the network device, a second message sent by the terminal, wherein the second message carries other information, except the partial information, in the first parameter.

18. The method of claim 17, wherein the second message is a message 5, MSG5, in the random access process.

19. The method of any one of claims 16 to 18, wherein the first parameter is:
identification information of the terminal, or a parameter used to indicate a network slice where the terminal is located, or an establishment cause value carried in the MSG3 or an Inactive Radio Network Temporary Identity, I-RNTI.

20. The method of claim 19, wherein the identification information is a System Architecture Evolution, SAE, Temporary Mobile Subscriber Identity, S-TMSI, or 5th-Generation, 5G-S-TMSI of the terminal.

21. The method of claim 19 or 20, wherein the first parameter is the identification information of the terminal, and the response message carries the partial information of the identification information.

22. The method of any one of claims 19 to 21, wherein the first parameter is the identification information of the terminal, and the partial information in the first message is information, except information of a target core network device of a Non-Access-Stratum, NAS, message of the terminal, in the identification information of the terminal.

23. The method of any one of claims 19 to 22, wherein the total number of bits required to be occupied by the identification information is 48 bits.

24. The method of claim 17 or 18, wherein the first parameter is the identification information of the terminal, and the other information carried in the second message is information which is used to identify the target core network device of the NAS message sent by the terminal.

25. The method of any one of claims 16 to 24, wherein the first message further comprises partial or whole information of a second parameter.

26. The method of claim 25, wherein the second parameter comprises a parameter configured to indicate a network slice accessed by the terminal, or an establishment cause value in the MSG3 or an I-RNTI.

27. The method of claim 26, wherein a number of bits occupied by the establishment cause value is greater than 3 bits; and/or,
a number of bits occupied by the parameter used to indicate the network slice where the terminal is located is 24 bits.

28. The method of any one of claims 16 to 27, wherein the first message is a message used to indicate a Radio Resource Control, RRC, connection request or an RRC request.

29. The method of claim 17 or 18, wherein the second message is a message used to indicate RRC connection setup completion, RRC connection resume completion, RRC setup completion or RRC resume completion.

30. The method of any one of claims 16 to 29, wherein an access network device presently accessed by the terminal is an access network device of a Long Term Evolution, LTE, system, and a core network device presently accessed by the terminal is a core network device of a 5G system.

31. A method for wireless communication, comprising:
sending, by a terminal, a first message to a network device, wherein the first message is a message 3, MSG3, in a random access process;
receiving, by the terminal, a response message sent by the network device responsive to the first message, wherein the response message is a message 4, MSG4, in the random access process; and
sending, by the terminal, a second message to the network device, wherein the second message carries identification information of the terminal, and the second message is a message 5, MSG5, in the random access process.

32. The method of claim 31, wherein the identification information of the terminal is a System Architecture Evolution, SAE, Temporary Mobile Subscriber Identity, S-TMSI, or 5th-Generation, 5G-S-TMSI of the terminal.

33. The method of claim 32, wherein the first message carries a random number.

34. The method of claim 33, wherein a number of bits occupied by the random number is less than a number of bits occupied by the identification information.

35. The method of any one of claims 31 to 34, wherein, before the first message is sent, the identification information is stored in the terminal.

36. The method of any one of claims 31 to 35, wherein the first message carries at least one of following parameters: a parameter used to indicate a network slice accessed by the terminal, or an establishment cause value carried in the MSG3 or an Inactive Radio Network Temporary Identity, I-RNTI.

37. The method of claim 36, wherein a number of bits occupied by the establishment cause value is greater than 3 bits; and/or,
a number of bits occupied by the parameter used to indicate the network slice where the terminal is located is 24 bits.

38. The method of any one of claims 31 to 37, wherein an access network device presently accessed by the terminal is an access network device of a Long Term Evolution, LTE, system, and a core network device presently accessed by the terminal is a core network device of a 5G system.

39. A method for wireless communication, comprising:
receiving, by a network device, a first message sent by a terminal, wherein the first message is a message 3, MSG3, in a random access process;
sending, by the network device, a response message to the terminal responsive to the first message , wherein the response message is a message 4, MSG4, in the random access process; and
receiving, by the network device, a second message sent by the terminal, wherein the second message carries identification information of the terminal, and the second message is a message 5, MSG5, in the random access process.

40. The method of claim 39, wherein the identification information of the terminal is a System Architecture Evolution, SAE, Temporary Mobile Subscriber Identity, S-TMSI, or 5th-Generation, 5G-S-TMSI of the terminal.

41. The method of claim 40, wherein the first message carries a random number.

42. The method of claim 41, wherein a number of bits occupied by the random number is less than a number of bits occupied by the identification information.

43. The method of any one of claims 39 to 42, wherein the first message carries at least one of following parameters: a parameter used to indicate a network slice accessed by the terminal, or an establishment cause value carried in the MSG3 or an Inactive Radio Network Temporary Identity, I-RNTI.

44. The method of claim 43, wherein a number of bits occupied by the establishment cause value is greater than 3 bits; and/or,
a number of bits occupied by the parameter used to indicate the network slice where the terminal is located is 24 bits.

45. The method of any one of claims 39 to 44, wherein an access network device presently accessed by the terminal is an access network device of a Long Term Evolution, LTE, system, and a core network device presently accessed by the terminal is a core network device of a 5G system.

46. A method for wireless communication, comprising:
in response to that a message 3, MSG3, in a random access process is able to contain identification information of a terminal, carrying the identification information of the terminal in the MSG3; and
sending, by the terminal, the MSG3 carrying the identification information to a network device.

47. The method of claim 46, wherein the identification information is an Inactive Radio Network Temporary Identity, I-RNTI, of the terminal.

48. The method of claim 46, wherein the identification information is a resume Identifier, ID, of the terminal.

49. The method of any one of claims 46 to 48, wherein the method is applied to a first system, an access network device of the first system is a Long Term Evolution, LTE, access network device, and a core network device of the first system is a 5th-Generation Core network, 5GC, device.

50. The method of claim 49, wherein a length of the identification information of the terminal is less than a length of the identification information, carried in the MSG3, of the terminal in second system, an access network device of the second system is a New Radio, NR, access network device, and a core network device of the second system is the 5GC device.

51. The method of claim 49 or 50, wherein the identification information comprises first identification information of the access network device and second identification information used to indicate that the terminal is in the access network device, and the first identification information is identification information of the LTE access network device.

52. The method of any one of claims 49 to 51, wherein a number of bits occupied by the identification information is 52 bits.

53. The method of any one of claims 46 to 48, wherein the method is applied to the second system, an access network device of the second system is a NR access network device, and a core network device of the second system is a 5GC device.

54. A terminal, comprising a processing unit and a transceiver unit, wherein
the processing unit is configured to generate a first message, wherein the first message is a message 3, MSG3, in a random access process, and the first message carries partial information in a first parameter; and
the transceiver unit is configured to: send the first message to a network device, the first message being the message 3, MSG3, in the random access process, and the first message carrying the partial information in the first parameter; and receive a response message sent by the network device responsive to the first message, the response message being a message 4, MSG4, in the random access process.

55. The terminal of claim 54, wherein the transceiver unit is configured to:
send a second message to the network device, wherein the second message carries other information, except the partial information, in the first parameter.

56. The terminal of claim 55, wherein the second message is a message 5, MSG5, in the random access process.

57. The terminal of any one of claims 54 to 56, wherein the first parameter is:
identification information of the terminal, or a parameter used to indicate a network slice where the terminal is located, or an establishment cause value carried in the MSG3 or an Inactive Radio Network Temporary Identity, I-RNTI.

58. The terminal of claim 57, wherein the identification information is a System Architecture Evolution, SAE, Temporary Mobile Subscriber Identity, S-TMSI, or 5th-Generation, 5G-S-TMSI of the terminal.

59. The terminal of claim 57 or 58, wherein the first parameter is the identification information of the terminal, and the processing unit is further configured to:
determine that the response message is responsive to the first message sent by the terminal according to the partial information of the identification information being carried in the response information.

60. The terminal of any one of claims 57 to 59, wherein the first parameter is the identification information of the terminal, and the partial information carried in the first message is information, except information of a target core network device of a Non-Access-Stratum, NAS, message of the terminal, in the identification information of the terminal.

61. The terminal of any one of claims 57 to 60, wherein a total number of bits required to be occupied by the identification information is 48 bits.

62. The terminal of claim 55 or 56, wherein the first parameter is the identification information of the terminal, and the other information carried in the second message is information which is used to identify a target core network device of the NAS message sent by the terminal.

63. The terminal of any one of claims 54 to 61, wherein the first message further comprises partial or whole information of a second parameter.

64. The terminal of claim 63, wherein the second parameter comprises a parameter used to indicate a network slice accessed by the terminal, or an establishment cause value in the MSG3 or an I-RNTI.

65. The terminal of claim 64, wherein a number of bits occupied by the establishment cause value is greater than 3 bits; and/or,
a number of bits occupied by the parameter used to indicate the network slice where the terminal is located is 24 bits.

66. The terminal of any one of claims 54 to 65, wherein the first message is a message used to indicate a Radio Resource Control, RRC, connection request or an RRC request.

67. The terminal of claim 55 or 56, wherein the second message is a message used to indicate RRC connection setup completion, RRC connection resume completion, RRC setup completion or RRC resume completion.

68. The terminal of any one of claims 54 to 67, wherein an access network device presently accessed by the terminal is an access network device of a Long Term Evolution, LTE, system, and a core network device presently accessed by the terminal is a core network device of a 5G system.

69. A network device, comprising a transceiver unit and a processing unit, wherein
the transceiver unit is configured to receive a first message sent by a terminal, wherein the first message is a message 3, MSG3, in a random access process, and the first message carries partial information in a first parameter;
the processing unit is configured to generate a response message responsive to the first message, wherein the response message is a message 4, MSG4, in the random access process; and
the transceiver unit is further configured to send the response message to the terminal.

70. The network device of claim 69, wherein the transceiver unit is further configured to:
receive a second message sent by the terminal, wherein the second message carries other information, except the partial information, in the first parameter.

71. The network device of claim 70, wherein the second message is a message 5, MSG5, in the random access process.

72. The network device of any one of claims 69 to 71, wherein the first parameter is:
identification information of the terminal, or a parameter used to indicate a network slice where the terminal is located, or an establishment cause value carried in the MSG3 or an Inactive Radio Network Temporary Identity, I-RNTI.

73. The network device of claim 72, wherein the identification information is a System Architecture Evolution, SAE, Temporary Mobile Subscriber Identity, S-TMSI, or 5th-Generation, 5G-S-TMSI of the terminal.

74. The network device of claim 72 or 73, wherein the first parameter is the identification information of the terminal, and the response message carries the partial information of the identification information.

75. The network device of any one of claims 72 to 74, wherein the first parameter is the identification information of the terminal, and the partial information in the first message is information, except information of a target core network device of a Non-Access-Stratum, NAS, message of the terminal, in the identification information of the terminal.

76. The network device of any one of claims 72 to 75, wherein a total number of bits required to be occupied by the identification information is 48 bits.

77. The network device of claim 70 or 71, wherein the first parameter is the identification information of the terminal, and the other information carried in the second message is information which is used to identify the target core network device of the NAS message sent by the terminal.

78. The network device of any one of claims 69 to 76, wherein the first message further comprises partial or whole information of a second parameter.

79. The network device of claim 78, wherein the second parameter comprises a parameter configured to indicate a network slice accessed by the terminal, or an establishment cause value in the MSG3 or an I-RNTI.

80. The network device of claim 79, wherein a number of bits occupied by the establishment cause value is greater than 3 bits; and/or,
a number of bits occupied by the parameter used to indicate the network slice where the terminal is located is 24 bits.

81. The network device of any one of claims 69 to 80, wherein the first message is a message used to indicate a Radio Resource Control, RRC, connection request or an RRC request..

82. The network device of claim 70 or 71, wherein the second message is a message used to indicate RRC connection setup completion, RRC connection resume completion, RRC setup completion or RRC resume completion.

83. The network device of any one of claims 69 to 82, wherein an access network device presently accessed by the terminal is an access network device of a Long Term Evolution, LTE, system, and a core network device presently accessed by the terminal is a core network device of a 5G system.

84. A terminal, comprising a processing unit and a transceiver unit, wherein
the processing unit is configured to generate a first message, wherein the first message is a message 3, MSG3, in a random access process;
the transceiver unit is configured to send the first message and receive a response message sent by a network device responsive to the first message, wherein the response message is a message 4, MSG4, in the random access process;
the processing unit is further configured to generate a second message, wherein the second message carries identification information of the terminal, and the second message is a message 5, MSG5, in the random access process; and
the transceiver unit is further configured to send the second message to the network device, wherein the second message carries the identification information of the terminal, and the second message is the message 5, MSG5, in the random access process.

85. The terminal of claim 84, wherein the identification information of the terminal is a System Architecture Evolution, SAE, Temporary Mobile Subscriber Identity, S-TMSI, or 5th-Generation, 5G-S-TMSI of the terminal.

86. The terminal of claim 85, wherein the first message carries a random number.

87. The terminal of claim 86, wherein a number of bits occupied by the random number is less than a number of bits occupied by the identification information.

88. The terminal of any one of claims 84 to 87, wherein, before the first message is sent, the identification information is stored in the terminal.

89. The terminal of any one of claims 84 to 88, wherein the first message carries at least one of following parameters: a parameter used to indicate a network slice accessed by the terminal, or an establishment cause value carried in the MSG3 or an Inactive Radio Network Temporary Identity, I-RNTI.

90. The terminal of claim 89, wherein a number of bits occupied by the establishment cause value is greater than 3 bits; and/or,
a number of bits occupied by the parameter used to indicate the network slice where the terminal is located is 24 bits.

91. A network device, comprising a transceiver unit and a processing unit, wherein
the transceiver unit is configured to receive a first message sent by a terminal, wherein the first message is a message 3, MSG3, in a random access process;
the processing unit is configured to generate a response message responsive to the first message, wherein the response message is a message 4, MSG4, in the random access process; and
the transceiver unit is further configured to send a response message to the terminal and receive a second message sent by the terminal, wherein the second message carries identification information of the terminal, and the second message is a message 5, MSG5, in the random access process.

92. The network device of claim 91, wherein the identification information of the terminal is a System Architecture Evolution, SAE, Temporary Mobile Subscriber Identity, S-TMSI, or 5th-Generation, 5G-S-TMSI of the terminal.

93. The network device of claim 92, wherein the first message carries a random number.

94. The network device of claim 93, wherein a number of bits occupied by the random number is less than a number of bits occupied by the identification information.

95. The network device of any one of claims 91 to 94, wherein the first message carries at least one of following parameters: a parameter used to indicate a network slice accessed by the terminal, or an establishment cause value carried in the MSG3 or an Inactive Radio Network Temporary Identity, I-RNTI.

96. The network device of claim 95, wherein a number of bits occupied by the establishment cause value is greater than 3 bits; and/or,
a number of bits occupied by the parameter used to indicate the network slice where the terminal is located is 24 bits.

97. A terminal, comprising a transceiver unit and a processing unit, wherein
the processing unit is configured to, in response to a message 3, MSG3, in a random access process is able to contain identification information of a terminal, carry the identification information of the terminal in the MSG3; and
the transceiver unit is configured to send the MSG3 carrying the identification information to a network device.

98. The terminal of claim 97, wherein the identification information is an Inactive Radio Network Temporary Identity, I-RNTI, of the terminal.

99. The terminal of claim 97, wherein the identification information is a resume Identifier, ID, of the terminal.

100. The terminal of any one of claims 97 to 99, wherein the terminal is applied to a first system, an access network device of the first system is a Long Term Evolution, LTE, access network device, and a core network device of the first system is a 5th-Generation Core network, 5GC, device.

101. The terminal of claim 100, wherein a length of the identification information of the terminal is less than a length of the identification information, carried in the MSG3, of the terminal in second system, an access network device of the second system is a New Radio, NR, access network device, and a core network device of the second system is the 5GC device.

102. The terminal of claim 100 or 101, wherein the identification information comprises first identification information of the access network device and second identification information used to indicate that the terminal is in the access network device, and the first identification information is identification information of the LTE access network device.

103. The terminal of any one of claims 100 to 102, wherein a number of bits occupied by the identification information is 52 bits.

104. The terminal of any one of claims 97 to 99, wherein the terminal is applied to the second system, an access network device of the second system is a NR access network device, and a core network device of the second system is a 5GC device.

105. A system, comprising a terminal and a network device, wherein
the terminal is configured to: send a first message to the network device, wherein the first message is a message 3, MSG3, in a random access process, and the first message carries partial information in a first parameter; and receive a response message sent by the network device responsive to the first message, wherein the response message is a message 4, MSG4, in the random access process; and
the network device is configured to: receive the first message sent by the terminal, wherein the first message is the message 3, MSG3, in a random access process, and the first message carries the partial information in the first parameter; and send the response message to the terminal responsive to the first message, wherein the response message is the message 4, MSG4, in the random access process.

106. A system, comprising a terminal and a network device, wherein
the terminal is configured to: send a first message to the network device, wherein the first message is a message 3, MSG3, in a random access process; receive a response message sent by the network device responsive to the first message, wherein the response message is a message 4, MSG4, in the random access process; and send a second message to the network device, wherein the second message carries identification information of the terminal, and the second message is a message 5, MSG5, in the random access process; and
the network device is configured to: receive the first message sent by the terminal, wherein the first message is the message 3, MSG3, in the random access process; and send the response message to the terminal responsive to the first message, wherein the response message is the message 4, MSG4, in the random access process,
the network device receives the second message sent by the terminal, wherein the second message carries the identification information of the terminal, and the second message is the message 5, MSG5, in the random access process.

107. A chip, comprising a processor, configured to call and run a computer program in a memory to enable a device installed with the chip to execute the method of any one of claims 1 to 53.

108. A communication device, comprising a processor and a memory, wherein the memory has a computer program stored thereon, and the processor is configured to call and run the computer program stored in the memory to execute the method of any one of claims 1 to 53.

109. A computer-readable storage medium having stored thereon a computer program, wherein the computer program enables a computer to execute the method of any one of claims 1 to 53.
